(19) Europäisches Patentamt
European Patent Office
Office européen des brevets

(11) **EP 1 889 518 B1**

(12) **EUROPEAN PATENT SPECIFICATION**

(45) Date of publication and mention
of the grant of the patent:
**14.12.2011 Bulletin 2011/50**

(51) Int Cl.:
***H05B 33/08*** *(2006.01)*

(21) Application number: **06744912.4**

(22) Date of filing: **11.05.2006**

(86) International application number:
**PCT/IB2006/051483**

(87) International publication number:
**WO 2006/126124 (30.11.2006 Gazette 2006/48)**

(54) **DESCRIBING TWO LED COLORS AS A SINGLE, LUMPED LED COLOR**

BESCHREIBUNG VON ZWEI LED-FARBEN ALS KONZENTRIERTE EINZEL-LED-FARBE

DESCRIPTION DE DEUX COULEURS DE DEL EN TANT QUE COULEUR DE DEL LOCALISEE UNIQUE

(84) Designated Contracting States:
**AT BE BG CH CY CZ DE DK EE ES FI FR GB GR HU IE IS IT LI LT LU LV MC NL PL PT RO SE SI SK TR**

(30) Priority: **25.05.2005 EP 05104441**

(43) Date of publication of application:
**20.02.2008 Bulletin 2008/08**

(73) Proprietor: **Koninklijke Philips Electronics N.V.**
**5621 BA Eindhoven (NL)**

(72) Inventors:
• **DEURENBERG, Peter, H., F.**
**NL-5656 AA Eindhoven (NL)**

• **ANSEMS, Johannes, P., M.**
**NL-5656 AA Eindhoven (NL)**
• **HOELEN, Christoph, G., A.**
**NL-5656 AA Eindhoven (NL)**

(74) Representative: **Bekkers, Joost J.J et al**
**Philips**
**Intellectual Property & Standards**
**P.O. Box 220**
**5600 AE Eindhoven (NL)**

(56) References cited:
**WO-A-2004/047498      US-A1- 2004 183 475**
**US-A1- 2004 240 890      US-B1- 6 411 046**

**Description**

TECHNICAL FIELD

The present invention relates to a light emitting diode (LED) lighting system for producing white light, and a method for controlling three or more sets of LEDs for providing white light.

BACKGOUND OF THE INVENTION

A current issue for a color adjustable light emitting diode (LED) light source is color rendering properties. To obtain a sufficiently large color gamut, the light source normally comprises three color LEDs: red, green, and blue. This is described in US patent no. 6,411,046, where light output and the color of the LEDs are controlled by measuring color coordinates for each LED light source for different temperatures, storing the expressions of the color coordinates as a function of the temperatures, deriving equations for the color coordinates as a function of temperature, calculating the color coordinates and lumen output fractions on-line, and controlling the light output and color of the LEDs based upon the calculated color coordinates and lumen based upon the calculated color coordinates and lumen output fractions. However, the demand on calculation power will increase cost of the lighting system. Further, the color rendering properties of a three-color system may not be satisfactory. Note that the color rendering index can only be optimized by choosing the wavelengths of the LEDs when designing the lighting system. This can be overcome by using more colors. However, the demand on calculation power would then raise even more, and thus the cost. Therefore, there is a need for an improved LED lighting system, and an improved method of controlling such a LED lighting system.

SUMMARY OF THE INVENTION

In view of the above, an objective of the invention is to solve or at least reduce the problems discussed above. In particular, an objective is to improve optimization of color rendering in sense of complexity.
The present invention is based on the understanding that complexity in controlling color rendering can be reduced by driving LEDs of different colors jointly, and how this can be implemented to obtain satisfactory color rendering and control properties although changes in temperature of the LEDs.
According to a first aspect of the present invention, there is provided a light emitting diode (LED) lighting system for producing white light, the system comprising a first set of LEDs arranged to emit light with a first wavelength range and a first set of characteristics; a second set of LEDs arranged to emit light with a second wavelength range and a second set of characteristics; a third set of LEDs arranged to emit light with a third wavelenght range and a third set of characteristics; and a driving circuit arranged to drive said sets of LEDs. The driving circuit comprises an input for parameters determining desired light intensity and color; an input for signals for LED temperatures of the sets of LEDs; a model for determining driving currents for said sets of LEDs from said parameters, signals, and sets of characteristics for each of said sets of LEDs; and a current driver for providing said determined currents to said sets of LEDs. The system is characterized in that said third set of LEDs comprises a first subset of LEDs with a first wavelength sub-range and a first set of characteristics, and a second subset of LEDs with a second wavelenght sub-range and a second set of characteristics, wherein said third wavelength range is a lumped wavelength range of said first and second wavelength sub-ranges, and said third set of characteristics is a function of said first and second sets of characteristics.
An advantage of this is improved color rendering without increased complexity of controlling. With the use of more than three colors, the color rendering index can be optimized after choosing the color to be generated.
Said sets of characteristics may comprise temperature dependency of light output, temperature dependency of wavelength, or current dependency of light output, or any combination thereof.
The first and second sub-set of light emitting diodes are electrically connected in series.
An advantage of this is that equal current is provided to the two sets of LEDs.
The lighting system may further comprise a temperature sensor for providing said signals for LED temperatures of the sets of LEDs, wherein said temperature sensor is arranged in a heat sink arranged at said sets of LEDs.
Said model for each set of LEDs may comprise a flux function of LED temperature being an exponential function of quotient of a difference between LED temperature and a reference temperature, and a flux dependency on temperature parameter according to the characteristics of each set of LEDs. Said model for each set of LEDs may comprise a wavelength function of LED temperature being dependent on a difference between LED temperature and a reference temperature, and a wavelength dependency on temperature parameter according to the characteristics of each set of LEDs.
According to a second aspect of the present invention, there is provided a method for controlling three sets of LEDs, each arranged to emit light with a wavelength range and with a set of characteristics, to provide white light, comprising the steps of: determining a desired light intensity and color; determining LED temperatures of the sets of LEDs; determining for each set of LEDs a driving current for each of said sets of LEDs from said desired light intensity and color, and said LED temperatures; and providing said driving currents to said sets of LEDs. The method is characterized in that at least one of said sets of LEDs comprises a first subset of LEDs with a first wavelength sub-range and a first set of characteristics, and a second subset of LEDs with a second wavelenght sub-range and a second set of characteristics, wherein a wavelength range of said set of LEDs is a lumped wavelength range of said first and second wavelength sub-ranges, and a set of characteristics of said set of LEDs is a function of said first and second sets of characteristics.

Said step of determining for each set of LEDs a driving current for each of said sets of LEDs may use a model for each set of LEDs comprising a wavelength function of LED temperature being dependent on a difference between LED temperature and a reference temperature, and a wavelength dependency on temperature parameter according to the characteristics of each set of LEDs.

The sets of LEDs may comprise one or more LEDs.

By LED temperature, it is meant a temperature under which an LED works. Physically, this is the junction temperature; practically and measurably, this is a temperature of a medium close to the junction, e.g. the capsule of the LED or a heat sink at the LED.

By reference temperature, it is meant a nominal temperature, at which properties of e.g. an LED is specified.

Generally, all terms used in the claims are to be interpreted according to their ordinary meaning in the technical field, unless explicitly defined otherwise herein. All references to "a/an/the [element, device, component, means, step, etc]" are to be interpreted openly as referring to at least one instance of said element, device, component, means, step, etc., unless explicitly stated otherwise. The steps of any method disclosed herein do not have to be performed in the exact order disclosed, unless explicitly stated.

Other objectives, features and advantages of the present invention will appear from the following detailed disclosure, from the attached dependent claims as well as from the drawings.

BRIEF DESCRIPTION OF THE DRAWINGS

The above, as well as additional objects, features and advantages of the present invention, will be better understood through the following illustrative and nonlimiting detailed description of preferred embodiments of the present invention, with reference to the appended drawings, where the same reference numerals will be used for similar elements, wherein:

    Fig. 1 shows a lighting system according to an embodiment of the present invention;
    Fig. 2 is a functional description of a driving circuit according to an embodiment of the present invention;
    Fig. 3 shows a lighting system according to an embodiment of the present invention;
    Fig. 4 shows a lighting system according to an embodiment of the present invention;
    Fig. 5 shows a lighting system according to an embodiment of the present invention; and
    Fig. 6 is a flow chart illustrating a method for controlling LEDs according to an embodiment of the present invention.

DETAILED DESCRIPTION OF PREFERRED EMBODIMENTS

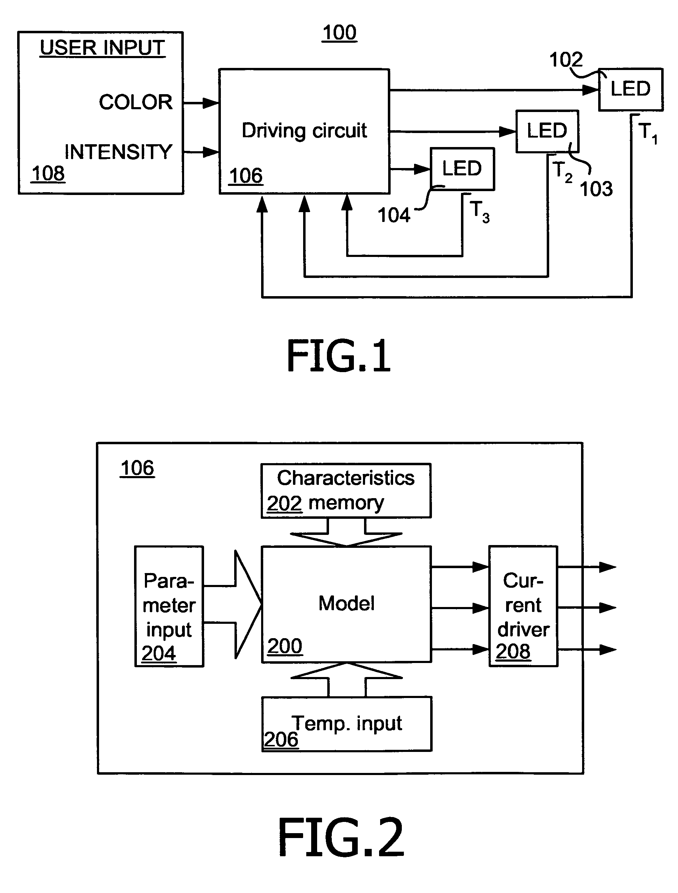

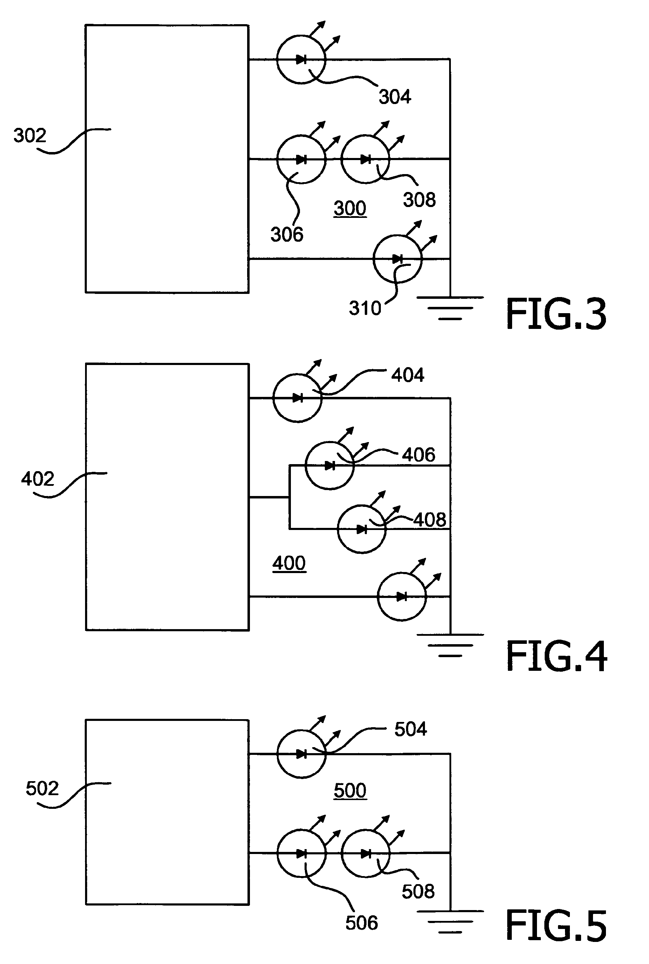

Fig. 1 shows a lighting system 100 according to an embodiment of the present invention, comprising sets of LEDs 102, 103, 104, a driving circuit 106, and an input 108 for desired light parameters, e.g. intensity and color. Each of the sets of LEDs 102, 103, 104 is arranged to emit light with a wavelength range and associated with a set of characteristics. The characteristics can be temperature dependency of light output, temperature dependency of wavelength and/or current dependency of light output. The driving circuit 106 is arranged to drive the sets of LEDs 102, 103, 104, e.g. by providing a determined driving current for each set of LEDs 102, 103, 104. The driving currents can be determined by a model, wherein the inputs to the model is desired light parameters provided by the input 108, characteristics of the sets of LEDs 102, 103, 104, and determined junction temperatures of the sets of LEDs 102, 103, 104. The LED temperatures, i.e. temperatures associated with the junction temperatures, are determined from measuring temperatures of e.g. the heat sinks of the LEDs, respectively. The control mechanism of the embodiment should be construed as an example, and other control mechanisms, known in the art, are equally possible. The system 100 has features, which will be further described with reference to Figs 3, 4, and 5.

Fig. 2 is a functional description of an embodiment of the driving circuit 106 of Fig. 1. The driving circuit 106 comprises a model 200, a memory 202 for characteristics of the sets of LEDs, a desired light parameter input 204, a LED temperature input 206, and a current driver 208. The model 200 is provided with characteristics, light parameters, and determined LED temperatures, and provides determined current levels for each of the sets of LEDs to the current driver 208, which provides the currents to the sets of LEDs (not shown). The driving circuit 106 has features, which will be further described with reference to Figs 3, 4, and 5.

Fig. 3 schematically shows a lighting system 300 according to an embodiment of the present invention. The lighting system 300 comprises a driving circuit 302 arranged to provide three driving signals. Note that illustration of parts for determining the driving signals, which are described above with reference to Figs 1 and 2, have been omitted for the sake of clarity. A first driving signal is arranged to drive a first set of light emitting diodes (LEDs), here depicted as a single LED 304, which LEDs are arranged to emit light with a first wavelength range. A second driving signal from the driving circuit 302 is arranged to drive a second set of LEDs, which comprises a first subset of LEDs, here depicted as a single LED 306, which LEDs are arranged to emit light with a first wavelength sub-range and are associated with a first set of characteristics, and a second subset of LEDs, here depicted as a single LED 308, which LEDs are arranged to emit light with a second wavelength sub-range and associated with a second set of characteristics. The second set of LEDs is treated as a single set of LEDs although it comprises two subsets of LEDs with different wavelength ranges and different characteristics. Thus, the second set of LEDs is assigned a wavelength range that is a lumped wavelength range of the first and second wavelength sub-ranges. Similarly, the second set of LEDs is assigned characteristics which is a function of the first and second sets of characteristics. The first and second subset of LEDs 306, 308 can be electrically connected in series. A third driving signal is arranged to drive a third set of LEDs, here depicted as a single LED 310, which LEDs are arranged to emit light with a third wavelength range. By controlling the three driving signals, the sets of LEDs emit light in different colors to provide a total light output with a desired white light. Further, by the control of the three driving signals, color and intensity of the total light output can be controlled.

The sets of LEDs can comprise one or more LEDs. The number of LEDs in each set can be chosen to optimize the balance between the various wavelength to enable feasible control of provision of white light with a desired color and intensity.

The light of the first wavelength range can be green, i.e. the center wavelength is somewhere in the range of 520 nm to 550 nm. The light of the third wavelength range can be blue, i.e. the center wavelength is somewhere in the range of 450 nm to 490 nm. The first and second wavelength sub-ranges can be red and amber, respectively, i.e. center wavelengths somewhere in the range of 610 nm to 645 nm and 580 nm to 600 nm, respectively. Due to the nature of LEDs, wavelengths around the center wavelengths are also provided. Further, the center wavelength is dependent on the junction temperature of the LED.

The above wavelengths are examples, and other wavelengths and ranges of wavelengths are possible within the scope of the present invention.

The characteristics of the LEDs can be, apart from reference wavelength range, reference light output, reference temperature, etc from e.g. a data sheet of the LED, temperature dependency of wavelength and light output. Empirically, it is found that light output (flux) can be derived from for example

$$\Phi(T_j) = \Phi_{ref} \exp\left(-\frac{T_j - T_{ref}}{T_0}\right), \qquad \text{(Eq. 1)}$$

where $T_0$ is a characteristic variable. Further, peak wavelength shift can be described for example by the empirically found relation

$$\lambda_p \approx \lambda_{p0} + \beta(T_j - T_{ref}), \qquad \text{(Eq. 2)}$$

where $\beta$ is a characteristic property. The values of the characteristics are different for LEDs of different color, as can be seen in exemplary Table 1.

Table 1

| LED color | RED | AMBER | GREEN | BLUE |
|---|---|---|---|---|
| $\beta$ (mWK) | 0.10 | 0.13 | 0.05 | 0.02 |
| To(K) | 95 | 65 | 260 | 400 |

The differences in characteristics means that it is not clear that a combination of red and amber LEDs can be seen as a single lumped LED. Earlier tests with a color feedback system utilizing these four colors showed that the differences in temperature behaviour are too significant to just lump the red and amber LEDs in a single degree of freedom, while only taking the optical properties at a single temperature into account. The combined LED can be modeled as a lumped LED with a similar radiation pattern and behaviour as a normal LED. By simulation, radiation pattern in both x- and y-coordinates and flux output of the combined red and amber LED is determined. Table 2 shows an example of a simulation.

Table 2

|  | RED | AMBER | LUMPED |
|---|---|---|---|
| # of LEDs | 2 | 6 | "1" |
| I(mA) | 350 | 350 | 350 |
| $\phi$ (1m/LED) | 59.5 | 45.8 | 320.0 |
| FWHM(nm) | 20 | 14 | 14 |
| $\lambda_{peak}$ (nm) | 617 | 593.25 | 598.25 |
| $\beta$ (nm/K) | 0.10 | 0.13 | 0.13 |
| To (K) | 95 | 65 | 68 |
| $R_{j2b}$ (K/W) | 18 | 18 | 18 |
| $V_F$ (V) | 2.910 | 2.670 | 2.730 |

Based on the simulation results of Table 2, the combination of 6 amber and 2 red LEDs yields both very good color rendering properties and easy driving, color feedback, and color adjustability. Easy, because there are only three degrees of freedom, which are explicitly determined by choosing a desired color-point. Note that a similar lumped LED can also be defined for a different combination of red and amber LEDs, or for a different combination of colors, e.g. blue and cyan, blue and green, or green and cyan LEDs.

In an alternative embodiment, it can be desirable to provide equal voltage for the sets being jointly driven. Fig. 4 shows a lighting system 400 according to an embodiment of the present invention. The lighting system 400 comprises a driving circuit 402 arranged to provide three driving signals. Note that illustration of parts for determining the driving signals, which are described above with reference to Figs 1 and 2, have been omitted for the sake of clarity. A first driving signal is arranged to drive a first set of LEDs, here depicted as a single LED 404, which LEDs are arranged to emit light with a first wavelength range. A second driving signal from the driving circuit 402 is arranged to drive a second set of LEDs comprising a first subset of LEDs, here depicted as a single LED 406, which LEDs are arranged to emit light with a first wavelength sub-range, and a second subset of LEDs, here depicted as a single LED 408, which LEDs are arranged to emit light with a second wavelength sub-range. The second set of LEDs is treated as a single set of LEDs although it comprises two sets of LEDs with different wavelength ranges and different characteristics. Thus, the second set of LEDs is assigned a wavelength range that is a lumped wavelength range of the first and second wavelength sub-ranges. Similarly, the second set of LEDs is assigned characteristics which is a function of the first and second subsets of characteristics. The first and second subset of LEDs can be electrically connected in parallel to provide equal voltage for the two subsets of LEDs 406, 408.

Fig. 5 shows a lighting system 500 according to an embodiment of the present invention, where only two driving signals are provided. The lighting system 500 comprises a driving circuit 502 arranged to provide two driving signals. A first driving signal is arranged to drive a first set of light emitting diodes (LEDs), here depicted as a single LED 504, which LEDs are arranged to emit light with a first wavelength. A second driving signal from the driving circuit 502 is arranged to drive a second set of LEDs comprising a first subset of LEDs, here depicted as a single LED 506, which LEDs are arranged to emit light with a first wavelength sub-range, and a second subset of LEDs, here depicted as a single LED 508, which LEDs are arranged to emit light with a second wavelength sub-range. The second set of LEDs is treated as a single set of LEDs although it comprises two subsets of LEDs with different wavelength ranges and different characteristics. Thus, the second set of LEDs is assigned a wavelength range that is a lumped wavelength range of the first and second wavelength sub-ranges. Similarly, the second set of LEDs is assigned characteristics which is a function of the first and second sets of characteristics. The first and second subset of LEDs can be electrically connected in series to provide equal current for the two sets 506, 508.

The sets and subsets of LEDs can comprise one or more LEDs. The number of LEDs and wavelength in each set and subset can be chosen to optimize the balance between the various wavelength to enable control of provision of white light with a desired color temperature range and color rendering index, color and intensity. The number of LEDs per color and their wavelength should be optimized for a certain color rendering in a desired color temperature range, color range and light intensity range.

The light of the first wavelength can be red, i.e. the center wavelength is somewhere in the range of 610 nm to 645 nm. The colors of the first and second subsets of LEDs can be blue and green, respectively, i.e. center wavelengths somewhere in the range of 450 nm to 490 nm and 520 nm to 550 nm, respectively.

The above embodiments of the present invention suggest driving more than one subset of LEDs jointly to facilitate control of color temperature of generated white light. Suggestions have been made to reduce a four-color system to three degrees of freedom and to reduce a three-color system to two degrees of freedom. However, the present invention can be used to implement a system with any number of colors with a reduced number of freedoms of control. Thus, a lighting system can comprise two or more lumped sets of LEDs similar to what is described above.

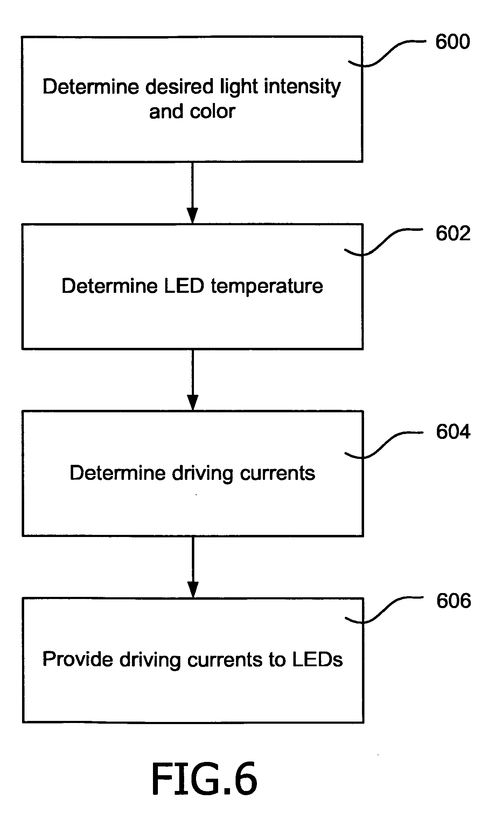

Fig. 6 is a flow chart illustrating a method for controlling a plurality of sets of LEDs according to an embodiment of the present invention. In a first determining step 600, a desired light intensity, color rendering index, and color temperature is determines In a second determining step 602, LED temperatures are determined, preferably the junction temperatures, e.g. by measuring temperatures of heat sinks of the LEDs and determining the junction temperatures of the LEDs from the temperatures of the heat sinks. In a third determining step 604, driving currents for each of the sets of LEDs are determined from the desired light intensity, color rendering index, and color temperature, and the LED temperatures. In a current provision step 606, driving currents are provided to each of the sets of LEDs. Further, the method comprises features according to what described above with reference to Figs 3, 4, and 5.

The methods according to the described embodiments of the present invention comprises a number of steps. The steps can be performed in any order, consecutively or parallelly, due to the real-time constraints of the art.

The invention has mainly been described above with reference to a few embodiments. However, as is readily appreciated by a person skilled in the art, other embodiments than the ones disclosed above are equally possible within the scope of the invention, as defined by the appended patent claims.

**Claims**

1. A light emitting diode (LED) lighting system (100) for producing white light, the system (100) comprising
   a first set of LEDs (102, 304, 404) arranged to emit light with a first wavelength range and a first set of characteristics;
   a second set ofLEDs (103, 310) arranged to emit light with a second wavelength range and a second set of characteristics;
   a third set of LEDs (104) arranged to emit light with a third wavelength range and a third set of characteristics; and
   a driving circuit (106) arranged to drive said sets of LEDs (102, 103, 104), comprising
   an input (108, 204) for parameters determining desired light intensity and color;
   an input for signals for LED temperatures of the sets of LEDs;
   a model (200) for determining driving currents for said sets of LEDs from said parameters, signals, and sets of characteristics for each of said sets of LEDs (102, 103, 104); and
   a current driver (208) for providing said determined currents to said sets of LEDs (102, 103, 104, 304, 404, 310), **characterized in that**,
   said third set of LEDs (104) comprises a first subset of LEDs (306, 406) with a first wavelength sub-range and a first set of characteristics, and a second subset of LEDs (308, 408) with a second wavelength sub-range and a second set of characteristics, wherein said third wavelength range is a lumped wavelength range of said first and second wavelength sub-ranges, and said third set of characteristics is a function of said first and second sets of characteristics, and wherein said model for each set of LEDs comprises a wavelength function of LED temperature being dependent on a difference between LED temperature and a reference temperature, and a wavelength dependency on temperature parameter according to the characteristics of each set of LEDs.

2. The lighting system according to claim 1, wherein said sets of characteristics comprise temperature dependency of light output, temperature dependency of wavelength, or current dependency of light output, or any combination thereof.

3. The lighting system according to any of claims 1 or 2, wherein said first wavelength range is from 450 nm to 490 nm, said second wavelength range is from 520 nm to 550 nm, said third wavelength range is from 580 nm to 645 nm, wherein said third wavelength is a lumped wavelength range of a first sub-range from 580 nm to 600 nm and a second sub-range from 610 nm to 645 nm.

4. The lighting system according to any of claims 1 or 2, wherein said first wavelength range is from 610 nm to 645 nm, said second wavelength range is from 580 nm to 600 nm, said third wavelength is from 450 nm to 550 nm, wherein wherein said third wavelength is a lumped wavelength range of a first sub-range from 450 nm to 490 nm, and a second sub-range from 520 nm to 550 nm.

5. The lighting system according to any of claims 1-4, wherein said first and second sub-set of light emitting diodes (306, 308) are electrically connected in series.

6. The lighting system according to any of claims 1-5, further comprising a temperature sensor for providing said signals for LED temperatures of the sets of LEDs, wherein said temperature sensor is arranged in a heat sink arranged at said sets of LEDs.

7. A method for controlling three sets of LEDs, each arranged to emit light with a wavelength range and with a set of characteristics, to provide white light, comprising the steps of:

determining a desired light intensity and color;
determining LED temperatures of the sets of LEDs;
determining for each set of LEDs a driving current for each of said sets of LEDs from said desired light intensity and color, and said LED temperatures; and
providing said driving currents to said sets of LEDs, **characterized in that**,
at least one of said sets of LEDs comprises a first subset of LEDs with a first wavelength sub-range and a first set of characteristics, and a second subset of LEDs with a second wavelenght sub-range and a second set of characteristics, wherein a wavelength range of said set of LEDs is a lumped wavelength range of said first and second wavelength sub-ranges, and a set of characteristics of said set of LEDs is a fuction of said first and second sets of characteristics, and wherein said step of determining for each set of LEDs a driving current for each of said sets of LEDs uses a model for each set of LEDs comprising a wavelength function of LED temperature being dependent on a difference between LED temperature and a reference temperature, and a wavelength dependency on temperature parameter according to the characteristics of each set of LEDs.

**Patentansprüche**

1. LED-(Leuchtdioden) Beleuchtungssystem (100) zur Erzeugung von weißem Licht, wobei das System (100) umfasst:

eine erste Gruppe von LEDs (102, 304, 404), die so vorgesehen ist, dass sie Licht mit einem ersten Wellenlängenbereich und einer ersten Gruppe von Eigenschaften emittiert;
eine zweite Gruppe von LEDs (103, 310), die so vorgesehen ist, dass sie Licht mit einem zweiten Wellenlängenbereich und einer zweiten Gruppe von Eigenschaften emittiert;
eine dritte Gruppe von LEDs (104), die so vorgesehen ist, dass sie Licht mit einem dritten Wellenlängenbereich und einer dritten Gruppe von Eigenschaften emittiert; sowie
eine Ansteuerungsschaltung (106) zur Ansteuerung der Gruppen von LEDs (102, 103, 104), mit:

einer Eingabe (108, 204) für Parameter, welche die gewünschte Lichtintensität und -farbe bestimmen;
einer Eingabe für Signale für LED-Temperaturen der LED-Gruppen;
einem Modell (200) zum Ermitteln von Ansteuerungsströmen für die LED-Gruppen anhand der Parameter, Signale und Gruppen von Eigenschaften für jede der Gruppen von LEDs (102, 103, 104), sowie
einem Stromtreiber (208), um den Gruppen von LEDs (102, 103, 104, 304, 404, 310) jeweils den ermittelten Strom zuzuführen, **dadurch gekennzeichnet, dass**
die dritte Gruppe von LEDs (104) eine erste Teilgruppe von LEDs (306, 406) mit einem ersten Wellenlängenteilbereich und einer ersten Gruppe von Eigenschaften sowie eine zweite Teilgruppe von LEDs (308, 408) mit einem zweiten Wellenlängenteilbereich und einer zweiten Gruppe von Eigenschaften umfasst, wobei der dritte Wellenlängenbereich ein aus dem ersten und zweiten Wellenlängenteilbereich zusammengefasster Wellenlängenbereich ist und die dritte Gruppe von Eigenschaften eine Funktion aus der ersten und zweiten Gruppe von Eigenschaften darstellt, und wobei das Modell für jede LED-Gruppe eine Wellenlängenfunktion der LED-Temperatur, die von einer Differenz zwischen LED-Temperatur und einer Referenztemperatur abhängig ist, sowie eine Wellenlängenabhängigkeit vom Temperaturparameter entsprechend den Eigenschaften jeder LED-Gruppe aufweist.

2. Beleuchtungssystem nach Anspruch 1, wobei die Gruppen von Eigenschaften eine Temperaturabhängigkeit der Lichtleistung, eine Temperaturabhängigkeit der Wellenlänge oder eine Stromabhängigkeit der Lichtleistung oder aber eine Kombination daraus aufweisen.

3. Beleuchtungssystem nach Anspruch 1 oder 2, wobei der erste Wellenlängenbereich zwischen 450 nm und 490 nm, der zweite Wellenlängenbereich zwischen 520 nm und 550 nm, der dritte Wellenlängenbereich zwischen 580 nm und 645 nm liegt, wobei der dritte Wellenlängenbereich ein aus einem ersten Teilbereich von 580 nm bis 600 nm und einem zweiten Teilbereich von 610 nm bis 645 nm zusammengefasster Wellenlängenbereich ist.

4. Beleuchtungssystem nach Anspruch 1 oder 2, wobei der erste Wellenlängenbereich zwischen 610 nm und 645 nm, der zweite Wellenlängenbereich zwischen 580 nm und 600 nm, der dritte Wellenlängenbereich zwischen 450 nm und 550 nm liegt, wobei der dritte Wellenlängenbereich ein aus einem ersten Teilbereich von 450 nm bis 490 nm und einem zweiten Teilbereich von 520 nm bis 550 nm zusammengefasster Wellenlängenbereich ist.

5. Beleuchtungssystem nach einem der Ansprüche 1-4, wobei der erste und zweite Teilbereich von Licht emittierenden Dioden (306, 308) elektrisch in Reihe geschaltet sind.

6. Beleuchtungssystem nach einem der Ansprüche 1-5, das weiterhin einen Temperatursensor umfasst, um die Signale für LED-Temperaturen der LED-Gruppen vorzusehen, wobei der Temperatursensor in einer an den LED-Gruppen angeordneten Wärmeableiteinrichtung platziert ist.

7. Verfahren zur Steuerung von drei LED-Gruppen, wobei jede so angeordnet ist, dass sie Licht mit einem Wellenlängenbereich und einer Gruppe von Eigenschaften emittiert, um weißes Licht vorzusehen, wobei das Verfahren die folgenden Schritte umfasst, wonach:

eine gewünschte Lichtintensität und -farbe ermittelt wird;
eine LED-Temperatur der LED-Gruppen ermittelt wird;
für jede LED-Gruppe ein Ansteuerungsstrom für jede der LED-Gruppen anhand der gewünschten Lichtintensität und -farbe sowie der LED-Temperaturen ermittelt wird; und
die Ansteuerungsströme den LED-Gruppen zugeführt werden, **dadurch gekennzeichnet, dass**
mindestens eine der LED-Gruppen eine erste Teilgruppe von LEDs mit einem ersten Wellenlängenteilbereich und einer ersten Gruppe von Eigenschaften und eine zweite Teilgruppe von LEDs mit einem zweiten Wellenlängenteilbereich und einer zweiten Gruppe von Eigenschaften umfasst, wobei ein Wellenlängenbereich der LED-Gruppe ein aus dem ersten und zweiten Wellenlängenteilbereich zusammengefasster Wellenlängenbereich ist und eine Gruppe von Eigenschaften der LED-Gruppe eine Funktion der ersten und zweiten Gruppe von Eigenschaften darstellt, und wobei der Schritt, wonach für jede LED-Gruppe ein Ansteuerungsstrom für jede der LED-Gruppen ermittelt wird, die Verwendung eines Modells für jede LED-Gruppe mit einer Wellenlängenfunktion der LED-Temperatur, die von einer Differenz zwischen LED-Temperatur und einer Referenztemperatur abhängig ist, sowie einer Wellenlängenabhängigkeit vom Temperaturparameter entsprechend den Eigenschaften jeder LED-Gruppe umfasst.

**Revendications**

1. Système d'éclairage à diodes électroluminescentes, DEL, (100) pour produire une lumière blanche, le système (100) comprenant :

un premier ensemble de DEL (102, 304, 404) agencées pour émettre une lumière avec une première plage de longueurs d'onde et un premier ensemble de caractéristiques ;
un deuxième ensemble de DEL (103, 310) agencées pour émettre une lumière avec une deuxième plage de longueurs d'onde et un deuxième ensemble de caractéristiques ;
un troisième ensemble de DEL (104) agencées pour émettre une lumière avec une troisième plage de longueurs d'onde et un troisième ensemble de caractéristiques ; et
un circuit d'attaque (106) agencé pour commander lesdits ensembles de DEL (102, 103, 104), comprenant :

une entrée (108, 204) pour des paramètres déterminant une intensité et une couleur de lumière souhaitées ;
une entrée pour des signaux de températures de DEL des ensembles de DEL ;
un modèle (200) pour déterminer des courants d'attaque pour lesdits ensembles de DEL à partir desdits paramètres, signaux et ensembles de caractéristiques pour chacun desdits ensembles de DEL (102, 103, 104) ; et
un pilote de courant (208) pour fournir lesdits courants déterminés aux dits ensembles de DEL (102, 103, 104, 304, 404, 310), **caractérisé en ce que**,
ledit troisième ensemble de DEL (104) comprend un premier sous-ensemble de DEL (306, 406) avec une première sous-plage de longueurs d'onde et un premier ensemble de caractéristiques, et un deuxième sous-ensemble de DEL (308, 408) avec une deuxième sous-plage de longueurs d'onde et un deuxième ensemble de caractéristiques, dans lequel ladite troisième plage de longueurs d'onde est une plage de longueurs d'onde regroupant lesdites première et deuxième sous-plages de longueurs d'onde, et ledit troisième ensemble de caractéristiques est une fonction desdits premier et deuxième ensembles de caractéristiques, et dans lequel ledit modèle pour chaque ensemble de DEL comprend une fonction de longueurs d'onde de température de DEL qui dépend d'une différence entre une température de DEL et une température de référence, et une dépendance de longueurs d'onde à un paramètre de température en fonction des caractéristiques de chaque ensemble de DEL.

2. Système d'éclairage selon la revendication 1, dans lequel lesdits ensembles de caractéristiques comprennent une dépendance de température à la sortie de lumière, une dépendance de température à la longueur d'onde, ou une dépendance de courant à la sortie de lumière, ou n'importe quelle combinaison de celles-ci.

3. Système d'éclairage selon l'une quelconque des revendications 1 et 2, dans lequel ladite première plage de longueurs d'onde est de 450 nm à 490 nm, ladite deuxième plage de longueurs d'onde est de 520 nm à 550 nm, ladite troisième plage de longueurs d'onde est de 580 nm à 645 nm, dans lequel ladite troisième longueur d'onde est une plage de longueurs d'onde regroupant une première sous-plage de 580 nm à 600 nm et une deuxième sous-plage de 610 nm à 645 nm.

4. Système d'éclairage selon l'une quelconque des revendications 1 et 2, dans lequel ladite première plage de longueurs d'onde est de 610 nm à 645 nm, ladite deuxième plage de longueurs d'onde est de 580 nm à 600 nm, ladite troisième plage de longueurs d'onde est de 450 nm à 550 nm, dans lequel ladite troisième longueur d'onde est une plage de longueurs d'onde regroupant une première sous-plage de 450 nm à 490 nm et une deuxième sous-plage de 520 nm à 550 nm.

5. Système d'éclairage selon l'une quelconque des revendications 1 à 4, dans lequel lesdits premier et deuxième sous-ensembles de diodes électroluminescentes (306, 308) sont électriquement connectés en série.

6. Système d'éclairage selon l'une quelconque des revendications 1 à 5, comprenant en outre un capteur de température pour fournir lesdits signaux de températures de DEL des ensembles de DEL, dans lequel ledit capteur de température est agencé dans un dissipateur thermique agencé aux niveaux desdits ensembles de DEL.

7. Procédé pour commander trois ensembles de DEL, chacun d'eux étant agencé pour émettre une lumière avec une plage de longueurs d'onde et avec un ensemble de caractéristiques, pour fournir une lumière blanche, comprenant les étapes de :

la détermination d'une intensité et d'une couleur de lumière souhaitées ;
la détermination de températures de DEL des ensembles de DEL ;
la détermination pour chaque ensemble de DEL d'un courant d'attaque pour chacun desdits ensembles de DEL à partir de ladite intensité de lumière souhaitée, de ladite couleur de lumière souhaitée, et desdites températures de DEL ; et
la fourniture desdits courants d'attaque aux dits ensembles de DEL, **caractérisé en ce que**
au moins l'un desdits ensembles de DEL comprend un premier sous-ensemble de DEL avec une première sous-plage de longueurs d'onde et un premier ensemble de caractéristiques, et un deuxième sous-ensemble de DEL avec une deuxième sous-plage de longueurs d'onde et un deuxième ensemble de caractéristiques, dans lequel une plage de longueurs d'onde dudit ensemble de DEL est une plage de longueurs d'onde regroupant lesdites première et deuxième sous-plages de longueurs d'onde, et un ensemble de caractéristiques dudit ensemble de DEL est une fonction desdits premier et deuxième ensembles de caractéristiques, et dans lequel ladite étape de détermination pour chaque ensemble de DEL d'un courant d'attaque pour chacun desdits ensembles de DEL utilise un modèle pour chaque ensemble de DEL comprenant une fonction de longueurs d'onde de température de DEL qui dépend d'une différence entre une température de DEL et une température de référence, et une dépendance de longueurs d'onde à un paramètre de température en fonction des caractéristiques de chaque ensemble de DEL.

## FIG.1

## FIG.2

302

304

306   300   308

310   FIG.3

402

404

406

408

400

FIG.4

502

504

500

506   508

FIG.5

```
┌─────────────────────────────┐
│                             │         ⌐ 600
│  Determine desired light    │
│  intensity and color        │
│                             │
└─────────────────────────────┘
              │
              ▼
┌─────────────────────────────┐
│                             │         ⌐ 602
│  Determine LED temperature  │
│                             │
└─────────────────────────────┘
              │
              ▼
┌─────────────────────────────┐
│                             │         ⌐ 604
│  Determine driving currents │
│                             │
└─────────────────────────────┘
              │
              ▼
┌─────────────────────────────┐
│                             │         ⌐ 606
│  Provide driving currents   │
│  to LEDs                    │
│                             │
└─────────────────────────────┘
```

# FIG.6

**EP 1 889 518 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6411046 B